# FASCICULE DE BREVET EUROPEEN

(11) **EP 3 672 819 B1**
(45) Date de publication et mention de la délivrance du brevet: **21.07.2021**
(21) Numéro de dépôt: 18759157.3
(22) Date de dépôt: 23.07.2018
(51) Int. Cl.: B60K 6/48, B60W 10/06, B60W 10/08, B60W 20/10, B60W 30/18

(54) **CONTRÔLE D'INSTANTS DE DÉCLENCHEMENT D'UNE MARCHE RAMPANTE PAR DES MOTEUR THERMIQUE ET MACHINE MOTRICE NON-THERMIQUE D'UN VÉHICULE HYBRIDE**
STEUERUNG DER STARTZEITEN EINES KRIECHVORGANGS DURCH EINEN VERBRENNUNGSMOTOR UND EINE NICHT-THERMISCHE ANTRIEBSMASCHINE EINES HYBRIDFAHRZEUGS
CONTROL OF THE START TIMES OF A CREEP OPERATION BY AN INTERNAL COMBUSTION ENGINE AND A NON-THERMAL DRIVE UNIT OF A HYBRID VEHICLE

(30) Priorité: 22.08.2017 FR 1757801
(43) Date de publication de la demande: 01.07.2020
(73) Titulaire: PSA Automobiles SA, 78300 Poissy (FR)
(72) Inventeur: SCHAEFFER, Eric, 75013 PARIS (FR); HABBANI, Ridouane, 92600 ASNIERES SUR SEINE (FR)
(86) Numéro de dépôt international: PCT/FR2018/051881
(87) Numéro de publication internationale: WO 2019/038492

(56) Documents cités:
- GB-A- 2 527 515
- US-A1- 2010 089 673
- US-A1- 2016 257 287

## Description

L'invention concerne les véhicules hybrides qui comprennent un moteur thermique et une machine motrice non-thermique consommant respectivement du carburant et de l'énergie (ou puissance) stockée dans au moins un moyen de stockage d'énergie pour fournir du couple, ensemble ou séparément, pour au moins un train.

On notera que l'invention concerne aussi bien les moyens de stockage d'énergie électrique que les moyens de stockage d'énergie hydraulique ou pneumatique. Par ailleurs, l'invention concerne aussi bien le cas dans lequel le moteur thermique et la machine motrice non-thermique fournissent deux couples pour un même train que le cas dans lequel le moteur thermique et la machine motrice non-thermique fournissent deux couples respectivement pour deux trains.

Certains véhicules hybrides, du type de ceux définis ci-avant, disposent d'une fonction dite de « marche rampante » (ou « rampage ») leur permettant de continuer à se déplacer sans à coup à faible vitesse (typiquement de 5 à 12 km/h sur le plat ou en pente) grâce à la fourniture d'un couple variable dès que leur vitesse tombe en-dessous d'un seuil et que leur conducteur n'agit plus sur les pédale de frein et pédale d'accélérateur. Ce mode de déplacement (ou roulage) permet au conducteur de manœuvrer plus facilement son véhicule en n'ayant besoin que de contrôler le volant et d'actionner temporairement la pédale de frein. Un véhicule hybride à fonction de rampage est notamment décrit dans le document brevet EP 2195185.

Le rampage était initialement inhérent aux véhicules à boîte de vitesses automatique à convertisseur de couple, puis a été implanté dans de nombreux autres véhicules automatisés. En fait, lorsque la boîte de vitesses est automatique, le rampage est une résultante du fonctionnement du convertisseur de couple qui transforme l'écart de régime entre l'arbre d'entrée de la boîte de vitesses automatique (relié au moteur thermique tournant à un régime non nul) et l'arbre de sortie de cette même boîte de vitesses automatique (couplé aux roues motrices). Pour les autres types de boîte de vitesses à automatisme, le rampage peut être réalisé par un pilotage d'organes destiné à se rapprocher du comportement d'une boîte de vitesses automatique.

On connait en outre le document de brevet GB-A-2 527 515 divulguant le préambule de la revendication 1.

Comme le sait l'homme de l'art, le rampage est un mode de roulage utile, mais qui induit plusieurs inconvénients dans une chaîne de transmission hybride, et notamment des temps de réponse différents et des prestations différentes selon que la fonction de rampage est réalisée avec du couple fourni par le moteur thermique ou la machine motrice non-thermique. En effet, si l'état de charge, du moyen de stockage d'énergie associé à la machine motrice non-thermique, est inférieur à un seuil prédéfini, on utilise le moteur thermique pour assurer la fonction de rampage, et si cet état de charge est supérieur à ce seuil prédéfini, on utilise la machine motrice non-thermique pour assurer la fonction de rampage. Ces temps de réponse différents et ces prestations différentes, résultant des performances différentes du moteur thermique et de la machine motrice non-thermique, peuvent provoquer un désagrément pour le conducteur et les passagers d'un véhicule hybride.

L'invention a donc notamment pour but d'améliorer la situation dans les véhicules hybrides.

Elle propose notamment un dispositif de contrôle destiné à équiper un véhicule comprenant une pédale de frein couplée à un circuit de freinage dans lequel règne une pression en cours, une pédale d'accélérateur, au moins un moyen de stockage d'énergie ayant un état de charge en cours, et un moteur thermique et une machine motrice non-thermique fournissant respectivement des couples pour au moins un train en consommant respectivement du carburant et de l'énergie stockée dans le moyen de stockage d'énergie.

Ce dispositif de contrôle se caractérise par le fait qu'il comprend des moyens de contrôle qui, lorsque le véhicule roule avec ses pédale de frein et pédale d'accélérateur non enfoncées, déclenchent soit un fonctionnement anticipé du moteur thermique pour fournir à un instant prédéfini un couple prédéfini pour assurer une fonction dite de marche rampante lorsque la pression en cours (dans le circuit de freinage) devient inférieure à un seuil de pression prédéfini, soit un fonctionnement retardé de la machine motrice non-thermique d'un intervalle de temps prédéfini après que la pression en cours (dans le circuit de freinage) soit devenue égale à une valeur prédéfinie, strictement inférieure au seuil de pression prédéfini, pour fournir à cet instant prédéfini ce couple prédéfini pour assurer cette fonction de marche rampante, selon que l'état de charge en cours est inférieur ou supérieur à un seuil d'état prédéfini.

Ainsi, on est désormais certain qu'à l'instant prédéfini le couple prédéfini (de rampage) sera fourni aux roues motrices, quelle que soit sa source (moteur thermique ou machine motrice).

Le dispositif de contrôle selon l'invention peut comporter d'autres caractéristiques qui peuvent être prises séparément ou en combinaison, et notamment :
- ses moyens de contrôle peuvent déclencher un fonctionnement du moteur thermique qui est avancé d'une durée prédéfinie par rapport à un instant de référence où la pression en cours devient égale à la valeur prédéfinie. Dans ce cas, cette durée prédéfinie est fonction du temps nécessaire pour que le moteur thermique fournisse le couple prédéfini (de rampage) à partir de la génération d'une première consigne de couple dédiée à la fonction de marche rampante et égale à ce couple prédéfini ;
   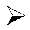 ses moyens de contrôle peuvent utiliser une durée prédéfinie qui est comprise entre -20 ms et -100 ms ;
   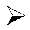 ses moyens de contrôle peuvent utiliser une durée prédéfinie qui a été préalablement apprise pour le véhicule ;
- ses moyens de contrôle peuvent déclencher un fonctionnement de la machine motrice non-thermique qui est retardé de l'intervalle de temps prédéfini par rapport à un instant de référence où la pression en cours devient égale à la valeur prédéfinie. Dans ce cas, cet intervalle de temps prédéfini est fonction du temps nécessaire pour que la machine motrice non-thermique fournisse le couple prédéfini à partir de la génération d'une seconde consigne de couple dédiée à la fonction de marche rampante et égale au couple prédéfini ;
   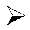 ses moyens de contrôle peuvent utiliser un intervalle de temps prédéfini compris entre +20 ms et +100 ms ;
   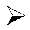 ses moyens de contrôle peuvent utiliser un intervalle de temps prédéfini qui a été préalablement appris pour le véhicule.

L'invention propose également un véhicule, éventuellement de type automobile, et comprenant une pédale de frein couplée à un circuit de freinage dans lequel règne une pression en cours, une pédale d'accélérateur, au moins un moyen de stockage d'énergie ayant un état de charge en cours, un moteur thermique et une machine motrice non-thermique fournissant respectivement des couples pour au moins un train en consommant respectivement du carburant et de l'énergie stockée dans le moyen de stockage d'énergie, et un dispositif de contrôle du type de celui présenté ci-avant.

Par exemple, la machine motrice non-thermique de ce véhicule peut être de type électrique. Dans ce cas, le moyen de stockage d'énergie stocke de l'énergie électrique.

L'invention propose également un procédé de contrôle destiné à être mis en œuvre dans un véhicule comprenant une pédale de frein couplée à un circuit de freinage dans lequel règne une pression en cours, une pédale d'accélérateur, au moins un moyen de stockage d'énergie ayant un état de charge en cours, et un moteur thermique et une machine motrice non-thermique fournissant respectivement des couples pour au moins un train en consommant respectivement du carburant et de l'énergie stockée dans le moyen de stockage d'énergie.

Ce procédé de contrôle se caractérise par le fait qu'il comprend une étape dans laquelle, lorsque le véhicule roule avec ses pédale de frein et pédale d'accélérateur non enfoncées, on déclenche soit un fonctionnement anticipé du moteur thermique pour fournir à un instant prédéfini un couple prédéfini pour assurer une fonction de marche rampante lorsque la pression en cours (dans le circuit de freinage) devient inférieure à un seuil de pression prédéfini, soit un fonctionnement retardé de la machine motrice non-thermique d'un intervalle de temps prédéfini après que la pression en cours (dans le circuit de freinage) soit devenue égale à une valeur prédéfinie, strictement inférieure au seuil de pression prédéfini, pour fournir à cet instant prédéfini ce couple prédéfini pour assurer cette fonction de marche rampante.

D'autres caractéristiques et avantages de l'invention apparaîtront à l'examen de la description détaillée ci-après, et des dessins annexés, sur lesquels :

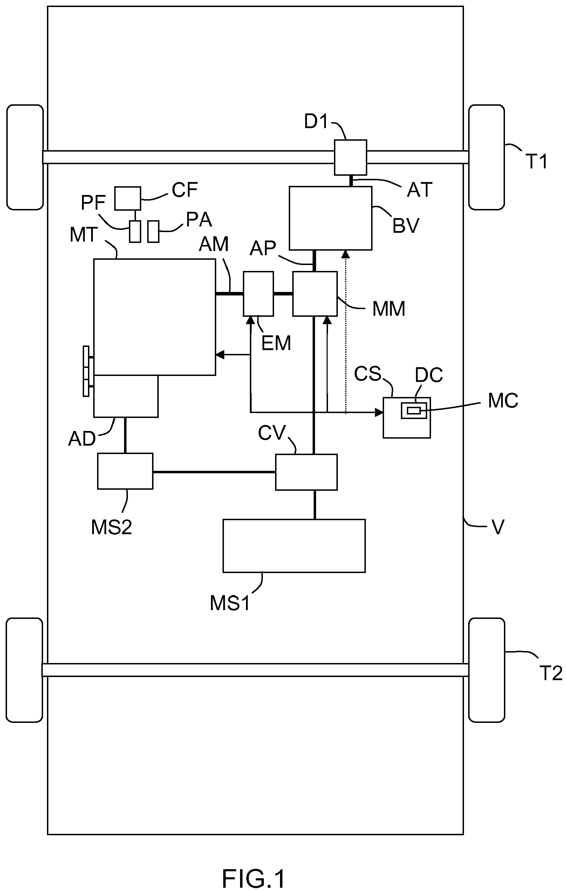

- la figure 1 illustre schématiquement et fonctionnellement un véhicule comprenant une chaîne de transmission hybride et un calculateur de supervision équipé d'un dispositif de contrôle selon l'invention, et

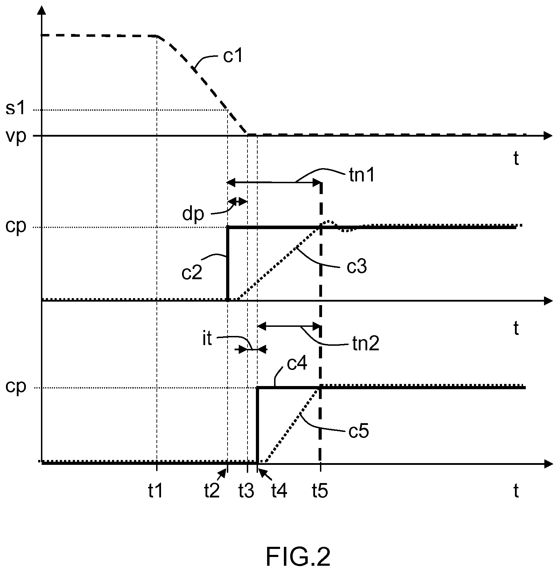

- la figure 2 illustre schématiquement, au sein d'un diagramme, un exemple de courbes d'évolutions temporelles de la pression dans le maître-cylindre d'un circuit de freinage d'un véhicule hybride (c1), d'une première consigne de couple de rampage avancée pour le moteur thermique de ce véhicule hybride (c2), d'un couple de rampage effectivement fourni par le moteur thermique pendant la phase de rampage pour satisfaire à la première consigne de couple de rampage (c3), d'une seconde consigne de couple de rampage retardée pour la machine motrice non-thermique de ce véhicule hybride (c4), et d'un couple de rampage effectivement fourni par la machine motrice non-thermique pendant la phase de rampage pour satisfaire à la seconde consigne de couple de rampage (c5).

L'invention a notamment pour but de proposer un dispositif de contrôle DC destiné à équiper un véhicule V, comprenant une chaîne de transmission hybride comportant au moins un moteur thermique MT et une machine motrice non-thermique MM, afin de contrôler les instants de déclenchement d'une fonction de marche rampante (ou de rampage) respectivement par ce moteur thermique MT et cette machine motrice MM.

Dans ce qui suit, on considère, à titre d'exemple non limitatif, que le véhicule V est de type automobile. Il s'agit par exemple d'une voiture. Mais l'invention n'est pas limitée à ce type de véhicule. Elle concerne en effet tout type de véhicule hybride terrestre et comportant au moins un moteur thermique et une machine motrice non-thermique fournissant respectivement des couples pour au moins un train de roues (ou analogues) en consommant respectivement du carburant et de l'énergie (ou puissance) stockée dans au moins un moyen de stockage d'énergie.

On entend ici par « machine motrice non-thermique » une machine agencée de manière à fournir ou récupérer du couple pour déplacer un véhicule, soit seule soit en complément d'un moteur thermique. Il pourra par exemple s'agir d'une machine (ou moteur) électrique, d'une machine hydraulique, ou d'une machine pneumatique (ou à air comprimé).

Par ailleurs, on entend ici par « moteur thermique » une machine ou un moteur consommant du carburant pour produire du couple pour déplacer un véhicule.

Sur la figure 1 se trouve schématiquement illustré un véhicule V comprenant une chaîne de transmission hybride, un calculateur de supervision CS propre à superviser (ou gérer) le fonctionnement de la chaîne de transmission, une pédale de frein PF couplée à un circuit (hydraulique) de freinage CF dans lequel règne une pression en cours p_{mc}, une pédale d'accélérateur PA, et un dispositif de contrôle DC selon l'invention.

La chaîne de transmission hybride comprend ici, notamment, un moteur thermique MT, un arbre moteur AM, un embrayage EM, une machine motrice non-thermique MM, des moyens de changement de rapport BV, un premier moyen de stockage d'énergie MS1 et un arbre de transmission AT.

Le moteur thermique comprend un vilebrequin (non représenté) qui est solidarisé fixement à l'arbre moteur AM afin d'entraîner ce dernier (AM) en rotation. Il est destiné à fournir du couple pour au moins un premier train T1 (ici de roues), via l'embrayage EM, la machine motrice (non-thermique) MM, et les moyens de changement de rapport BV. Mais dans une variante de réalisation il pourrait fournir du couple pour au moins un train via l'embrayage EM et les moyens de changement de rapport BV.

Par exemple, le premier train T1 est situé à l'avant du véhicule V, et couplé à l'arbre de transmission AT, de préférence, et comme illustré, via un différentiel (ici avant) D1. Mais dans une variante ce premier train T1 pourrait être situé à l'arrière du véhicule V.

L'embrayage EM est chargé de coupler/découpler l'arbre moteur AM (couplé au moteur thermique MT) à/de la machine motrice MM, sur ordre du calculateur de supervision CS, afin de communiquer du couple qu'elle produit. Cet embrayage EM peut être de tout type dès lors qu'il peut prendre au moins un premier état (couplé) dans lequel il assure le couplage entre le moteur thermique MT et la machine motrice MM, et un deuxième état (découplé) dans lequel il découple le moteur thermique MT de la machine motrice MM.

La machine motrice MM est couplée au premier moyen de stockage d'énergie MS1 afin d'être alimentée en énergie ou d'alimenter ce dernier (MS1) en énergie. Elle est également couplée à la sortie de l'embrayage EM et à l'arbre primaire AP des moyens de changement de rapport BV.

On considère dans ce qui suit, à titre d'exemple non limitatif, que la machine motrice MM est de type électrique. Mais l'invention n'est pas limitée à ce type de machine motrice non-thermique. Ainsi, elle concerne également et notamment les machines (ou moteurs) hydrauliques, et les machines (ou moteurs) pneumatiques (ou à air comprimé).

Etant donné que l'on considère ici que la machine motrice MM est de type électrique, le premier moyen de stockage d'énergie MS1 qui l'alimente en énergie est agencé pour stocker de l'énergie électrique, par exemple en basse tension (typiquement 220 V à titre illustratif). L'état de charge (ou SOC (« State Of Charge »)) en cours ec de ce premier moyen de stockage d'énergie MS1 est connu du calculateur de supervision CS.

Les moyens de changement de rapport BV peuvent, par exemple, être agencés sous la forme d'une boîte de vitesses, éventuellement automatisée. Ils comprennent l'arbre primaire AP qui est destiné à recevoir du couple de la machine motrice MM, et un arbre secondaire destiné à recevoir ce couple via l'arbre primaire AP afin de le communiquer à l'arbre de transmission AT auquel il est couplé et qui est couplé indirectement aux roues motrices (ici avant) du véhicule V via le différentiel D1. Mais dans une variante de réalisation les moyens de changement de rapport BV pourraient, par exemple, comprendre au moins un train épicycloïdal comprenant un, deux ou trois synchronisateurs.

On notera, comme illustré non limitativement sur la figure 1, que la chaîne de transmission peut également comprendre un démarreur ou un alterno-démarreur AD couplé au moteur thermique MT et chargé de lancer ce dernier (MT) afin de lui permettre de démarrer. Ce lancement se fait grâce à de l'énergie électrique qui est, par exemple et comme illustré non limitativement, stockée dans un second moyen de stockage MS2. Ce second moyen de stockage MS2 peut être agencé sous la forme d'une batterie très basse tension (par exemple 12 V, 24 V ou 48V). Cette dernière (MS2) peut, par exemple, alimenter un réseau de bord auquel sont connectés des équipements électriques du véhicule V. Par ailleurs, ce second moyen de stockage MS2 peut, comme illustré non limitativement, être couplé au premier moyen de stockage d'énergie MS1 et à la machine motrice MM via un convertisseur CV de type DC/DC, afin de pouvoir être rechargé.

Les fonctionnements d'au moins le moteur thermique MT, la machine motrice MM et l'embrayage EM, ainsi qu'éventuellement des moyens de changement de rapport BV, peuvent être contrôlés par le calculateur de supervision CS. Par ailleurs, le calculateur de supervision CS est informé à chaque instant du pourcentage d'enfoncement de la pédale de frein PF, de la pression en cours p_{mc}, régnant dans le circuit de freinage CF (et plus précisément dans le maître-cylindre de ce dernier (CF)), et du pourcentage d'enfoncement de la pédale d'accélérateur PA.

On notera que la chaîne de transmission pourrait également comprendre une autre machine motrice non-thermique en complément de sa machine motrice MM. Dans ce cas, cette autre machine motrice non-thermique est chargée de fournir du couple pour un second train T2 du véhicule V, par exemple situé à l'arrière, à partir de l'énergie stockée dans le premier moyen de stockage d'énergie MS1. Elle fonctionne alors soit seule soit en complément du moteur thermique MT et/ou de la machine motrice MM, en fonction des commandes fournies par le calculateur de supervision CS.

Comme indiqué précédemment, l'invention propose un dispositif de contrôle DC destiné à équiper le véhicule V afin de contrôler les instants de déclenchement d'une fonction de marche rampante (ou de rampage) respectivement par le moteur thermique MT et la machine motrice MM.

Il est rappelé que la fonction de marche rampante est destinée, lorsqu'elle est activée par le superviseur CS, à déplacer le véhicule V à faible vitesse (typiquement entre 5 km/h et 12 km/h) par fourniture d'un couple variable produit par son moteur thermique MT ou sa machine motrice MM sans que son conducteur n'agisse sur ses pédales de frein PF et d'accélérateur PA.

Dans l'exemple non limitatif illustré sur la figure 1, le dispositif de contrôle DC fait partie du calculateur de supervision CS. Mais cela n'est pas obligatoire. Ce dispositif de contrôle DC pourrait en effet être un équipement couplé au calculateur de supervision CS, directement ou indirectement. Par conséquent, le dispositif de contrôle DC peut être réalisé sous la forme de modules logiciels (ou informatiques ou encore « software »), ou bien d'une combinaison de circuits électroniques (ou « hardware ») et de modules logiciels.

Un dispositif de contrôle DC, selon l'invention, comprend des moyens de contrôle MC qui sont chargés d'intervenir chaque fois que le véhicule V roule, en marche avant ou marche arrière et à une vitesse inférieure à un seuil de vitesse, avec ses pédale de frein PF et pédale d'accélérateur PA non enfoncées. Ce seuil de vitesse est par exemple égal à 10 km/h.

Chaque fois que la situation de vie précité survient, les moyens de contrôle MC déclenchent soit un fonctionnement anticipé du moteur thermique MT, soit un fonctionnement retardé de la machine motrice (non-thermique) MM, selon que l'état de charge en cours ec du premier moyen de stockage d'énergie MS1 est inférieur ou supérieur à un seuil d'état s2 prédéfini.

Le fonctionnement anticipé du moteur thermique MT est déclenché pour fournir à un instant prédéfini ip (ou t5) un couple prédéfini cp pour assurer la fonction de marche rampante lorsque la pression en cours p_{mc} dans le maître-cylindre du circuit de freinage CF devient inférieure à un seuil de pression s1 prédéfini.

Le fonctionnement retardé de la machine motrice MM est déclenché un intervalle de temps prédéfini it après que la pression en cours p_{mc} dans le maître-cylindre du circuit de freinage CF soit devenue égale à une valeur prédéfinie vp, strictement inférieure au seuil de pression prédéfini s1, pour fournir à cet instant prédéfini ip (ou t5) ce couple prédéfini cp pour assurer la fonction de marche rampante.

En d'autres termes, si le véhicule V roule à une vitesse inférieure au seuil de vitesse avec ses pédale de frein PF et pédale d'accélérateur PA non enfoncées, et si ec est inférieur à s2, alors les moyens de contrôle MC déclenchent un fonctionnement anticipé du moteur thermique MT lorsque p_{mc} devient inférieure à s1. Maintenant, si le véhicule V roule à une vitesse inférieure au seuil de vitesse avec ses pédale de frein PF et pédale d'accélérateur PA non enfoncées, et si ec est supérieur à s2, alors les moyens de contrôle MC déclenchent un fonctionnement retardé de la machine motrice MM d'un intervalle de temps prédéfini it après que p_{mc} soit devenue égale à vp.

Cette valeur prédéfinie vp peut, par exemple, être nulle.

Grâce à cette stratégie de contrôle des instants de déclenchement de la fonction de marche rampante respectivement par le moteur thermique MT et la machine motrice MM, on est désormais certain qu'à l'instant prédéfini ip le couple prédéfini cp (de rampage) sera fourni aux roues motrices, quelle que soit sa source (MT ou MM). Ainsi, les temps de réponse et prestations du moteur thermique MT et de la machine motrice MM apparaissent sensiblement identiques, ce qui évite tout désagrément pour le conducteur et les passagers du véhicule V lors d'une phase de rampage.

Par exemple, les moyens de contrôle MC peuvent déclencher le fonctionnement du moteur thermique MT avancé d'une durée dp prédéfinie par rapport à un instant de référence ir (ou t3) où la pression en cours devient égale à la valeur prédéfinie vp (voir figure 2). Dans ce cas, cette durée prédéfinie dp est fonction du temps tn1 nécessaire pour que le moteur thermique MT fournisse le couple prédéfini cp à partir de la génération d'une première consigne de couple dédiée à la fonction de marche rampante et égale au couple prédéfini cp (voir figure 2).

La durée prédéfinie dp, qui est utilisée par les moyens de contrôle MC, peut, par exemple, être comprise entre -20 ms et -100 ms. A titre d'exemple, les moyens de contrôle MC peuvent utiliser une durée prédéfinie dp égale à -50 ms.

On notera que les moyens de contrôle MC peuvent utiliser une durée prédéfinie dp qui a été préalablement apprise pour le véhicule V lors de tests en usine ou sur route.

Egalement par exemple, les moyens de contrôle MC peuvent déclencher le fonctionnement de la machine motrice MM retardé de l'intervalle de temps prédéfini it par rapport à l'instant de référence ir (ou t3) où la pression en cours p_{mc} dans le maître-cylindre du circuit de freinage CF devient égale à la valeur prédéfinie vp (voir figure 2). Dans ce cas, cet intervalle de temps prédéfini it est fonction du temps tn2 nécessaire pour que la machine motrice MM fournisse le couple prédéfini cp à partir de la génération d'une seconde consigne de couple dédiée à la fonction de marche rampante et égale au couple prédéfini cp (voir figure 2).

L'intervalle de temps prédéfini it, qui est utilisé par les moyens de contrôle MC, peut, par exemple, être compris entre +20 ms et +100 ms. A titre d'exemple, les moyens de contrôle MC peuvent utiliser un intervalle de temps prédéfini it égal à +50 ms.

On notera que les moyens de contrôle MC peuvent utiliser un intervalle de temps prédéfini it qui a été préalablement appris pour le véhicule V lors de tests en usine ou sur route.

On notera également que si l'on anticipe trop l'instant (t2) où l'on génère la première consigne de couple du moteur thermique MT (et donc si l'on utilise une durée prédéfinie dp trop grande), on risque de déclencher la phase de rampage avec un seuil de pression s1 trop important, et donc à tort. Inversement, si l'on retarde trop l'instant (t4) où l'on génère la seconde consigne de couple de la machine motrice MM (et donc si l'on utilise un intervalle de temps prédéfini it trop grand), on risque de dégrader l'agrément du conducteur car ce dernier va penser que la fonction de rampage ne s'est pas déclenchée.

On a schématiquement illustré au sein des diagrammes de la figure 2 un exemple de situation de vie du véhicule V dans lequel survient une phase de rampage aboutissant à la fourniture du couple prédéfini cp à l'instant prédéfini ip (ou t5) soit par le moteur thermique MT (diagramme central), soit par la machine motrice MM (diagramme du bas).

Dans ces diagrammes :
- une première courbe c1 représente un exemple d'évolution temporelle (t) de la pression p_{mc} dans le maître-cylindre du circuit de freinage CF,
- une deuxième courbe c2 représente un exemple d'évolution temporelle (t) de la première consigne de couple de rampage générée pour le moteur thermique MT avant et pendant une phase de rampage lorsque l'état de charge en cours ec du premier moyen de stockage d'énergie MS1 est inférieur au seuil d'état prédéfini s2,
- une troisième courbe c3 représente un exemple d'évolution temporelle (t) du couple de rampage effectivement fourni par le moteur thermique MT pendant la phase de rampage pour satisfaire à la première consigne de couple de rampage,
- une quatrième courbe c4 représente un exemple d'évolution temporelle (t) de la seconde consigne de couple de rampage générée pour la machine motrice MM avant et pendant une phase de rampage lorsque l'état de charge en cours ec du premier moyen de stockage d'énergie MS1 est supérieur au seuil d'état prédéfini s2, et
- une cinquième courbe c5 représente un exemple d'évolution temporelle (t) du couple de rampage effectivement fourni par la machine motrice MM pendant la phase de rampage pour satisfaire à la seconde consigne de couple de rampage.

Dans cet exemple, on peut observer sur la courbe c1 qu'à partir d'un instant t1 la pression en cours p_{mc} (dans le maître-cylindre du circuit de freinage CF) commence à décroître fortement, ce qui est caractéristique du fait que le conducteur vient de cesser d'enfoncer la pédale de frein PF. On considère ici que le véhicule V roule, en marche avant ou marche arrière et à une vitesse qui est inférieure au seuil de vitesse, avec sa pédale d'accélérateur PA également non enfoncée.

A partir d'un instant t2, la pression en cours p_{mc} (c1) devient inférieure au seuil de pression s1. Si les moyens de contrôle MC constatent que l'état de charge en cours ec est inférieur au seuil d'état s2, alors ils déclenchent immédiatement à l'instant t2 un fonctionnement anticipé du moteur thermique MT. Pour ce faire, et comme illustré sur le diagramme central par la courbe c2, ils génèrent pour le moteur thermique MT, à l'instant t2 décalé de l'instant de référence t3 (ou ir) de la durée prédéfinie dp, une première consigne de couple de rampage égale au couple prédéfini cp. On peut observer sur la courbe c3 que légèrement après l'instant t2 le couple de rampage effectivement fourni par le moteur thermique MT croît pendant la phase de rampage jusqu'à ce qu'il atteigne la valeur du couple prédéfini cp à l'instant t5 (égal à l'instant prédéfini ip).

En revanche, si à l'instant t2 les moyens de contrôle MC constatent que l'état de charge en cours ec est supérieur au seuil d'état s2, alors ils déclenchent un fonctionnement retardé du moteur thermique MT. Pour ce faire, et comme illustré sur le diagramme du bas par la courbe c4, ils génèrent pour la machine motrice MM, à un instant t4 décalé de l'instant de référence t3 (ou ir) d'une durée égale à l'intervalle de temps prédéfini it, une seconde consigne de couple de rampage égale au couple prédéfini cp. On peut observer sur la courbe c5 que légèrement après l'instant t4 le couple de rampage effectivement fourni par la machine motrice MM croît pendant la phase de rampage jusqu'à ce qu'il atteigne la valeur du couple prédéfini cp à l'instant t5 (égal à l'instant prédéfini ip), comme dans le cas de la courbe c3.

Il est également important de noter que l'invention peut être également considérée sous l'angle d'un procédé de contrôle, pouvant être notamment mis en œuvre au moyen d'un dispositif de contrôle DC du type de celui présenté ci-avant. Les fonctionnalités offertes par la mise en œuvre du procédé selon l'invention étant identiques à celles offertes par le dispositif de contrôle DC présenté ci-avant, seule la combinaison de fonctionnalités principales offerte par le procédé est présentée ci-après.

Ce procédé de contrôle comprend une étape dans laquelle, lorsque le véhicule V roule avec ses pédale de frein PF et pédale d'accélérateur PA non enfoncées, on (le dispositif de contrôle DC du véhicule V) déclenche soit un fonctionnement anticipé du moteur thermique MT pour fournir à un instant prédéfini ip un couple prédéfini cp pour assurer une fonction de marche rampante lorsque la pression en cours p_{mc} devient inférieure à un seuil de pression s1 prédéfini, soit un fonctionnement retardé de la machine motrice MM d'un intervalle de temps prédéfini it après que la pression en cours p_{mc} soit devenue égale à une valeur prédéfinie vp, strictement inférieure au seuil de pression prédéfini s1, pour fournir à cet instant prédéfini ip ce couple prédéfini cp pour assurer la fonction de marche rampante, selon que l'état de charge en cours ec du moyen de stockage d'énergie MS1 est inférieur ou supérieur à un seuil d'état s2 prédéfini.

L'invention permet de garantir une prestation de la phase de rampage homogène quelle que soit la source de couple (thermique ou non thermique) utilisée.

## Revendications

1. Dispositif de contrôle (DC) pour un véhicule (V) comprenant i) une pédale de frein (PF) couplée à un circuit de freinage (CF) dans lequel règne une pression en cours, ii) une pédale d'accélérateur (PA), iii) au moins un moyen de stockage d'énergie (MS1) ayant un état de charge en cours, et iv) un moteur thermique (MT) et une machine motrice non-thermique (MM) fournissant respectivement des couples pour au moins un train (T1) en consommant respectivement du carburant et de l'énergie stockée dans ledit moyen de stockage d'énergie (MS1), **caractérisé en ce qu'**il comprend des moyens de contrôle (MC) déclenchant, lorsque ledit véhicule (V) roule avec lesdites pédale de frein (PF) et pédale d'accélérateur (PA) non enfoncées, soit un fonctionnement anticipé dudit moteur thermique (MT) pour fournir à un instant prédéfini un couple prédéfini pour assurer une fonction dite de marche rampante lorsque ladite pression en cours devient inférieure à un seuil de pression prédéfini, soit un fonctionnement retardé de ladite machine motrice non-thermique (MM) d'un intervalle de temps prédéfini après que ladite pression en cours soit devenue égale à une valeur prédéfinie, strictement inférieure audit seuil de pression prédéfini, pour fournir audit instant prédéfini ledit couple prédéfini pour assurer ladite fonction de marche rampante, selon que ledit état de charge en cours est inférieur ou supérieur à un seuil d'état prédéfini.

2. Dispositif selon la revendication 1, **caractérisé en ce que** lesdits moyens de contrôle (MC) déclenchent ledit fonctionnement du moteur thermique (MT) avancé d'une durée prédéfinie par rapport à un instant de référence où ladite pression en cours devient égale à ladite valeur prédéfinie, cette durée prédéfinie étant fonction du temps nécessaire pour que ledit moteur thermique (MT) fournisse ledit couple prédéfini à partir de la génération d'une première consigne de couple dédiée à ladite fonction de marche rampante et égale audit couple prédéfini.

3. Dispositif selon la revendication 2, **caractérisé en ce que** lesdits moyens de contrôle (MC) utilisent une durée prédéfinie comprise entre -20 ms et -100 ms.

4. Dispositif selon la revendication 2 ou 3, **caractérisé en ce que** lesdits moyens de contrôle (MC) utilisent une durée prédéfinie préalablement apprise pour ledit véhicule (V).

5. Dispositif selon l'une des revendications 1 à 4, **caractérisé en ce que** lesdits moyens de contrôle (MC) déclenchent ledit fonctionnement de la machine motrice non-thermique (MM) retardé dudit intervalle de temps prédéfini par rapport à un instant de référence où ladite pression en cours devient égale à ladite valeur prédéfinie, cet intervalle de temps prédéfini étant fonction du temps nécessaire pour que ladite machine motrice non-thermique (MM) fournisse ledit couple prédéfini à partir de la génération d'une seconde consigne de couple dédiée à ladite fonction de marche rampante et égale audit couple prédéfini.

6. Dispositif selon la revendication 5, **caractérisé en ce que** lesdits moyens de contrôle (MC) utilisent un intervalle de temps prédéfini compris entre +20 ms et +100 ms.

7. Dispositif selon la revendication 5 ou 6, **caractérisé en ce que** lesdits moyens de contrôle (MC) utilisent un intervalle de temps prédéfini préalablement appris pour ledit véhicule (V).

8. Véhicule (V) comprenant i) une pédale de frein (PF) couplée à un circuit de freinage (CF) dans lequel règne une pression en cours, ii) une pédale d'accélérateur (PA), iii) au moins un moyen de stockage d'énergie (MS1) ayant un état de charge en cours, et iv) un moteur thermique (MT) et une machine motrice non-thermique (MM) fournissant respectivement des couples pour au moins un train (T1) en consommant respectivement du carburant et de l'énergie stockée dans ledit moyen de stockage d'énergie (MS1), **caractérisé en ce qu'**il comprend en outre un dispositif de contrôle (DC) selon l'une des revendications précédentes.

9. Véhicule selon la revendication 8, **caractérisé en ce que** ladite machine motrice non-thermique (MM) est de type électrique, et ledit moyen de stockage d'énergie (MS1) stocke de l'énergie électrique.

10. Procédé de contrôle (DC) pour un véhicule (V) comprenant i) une pédale de frein (PF) couplée à un circuit de freinage (CF) dans lequel règne une pression en cours, ii) une pédale d'accélérateur (PA), iii) au moins un moyen de stockage d'énergie (MS1) ayant un état de charge en cours, et iv) un moteur thermique (MT) et une machine motrice non-thermique (MM) fournissant respectivement des couples pour au moins un train (T1) en consommant respectivement du carburant et de l'énergie stockée dans ledit moyen de stockage d'énergie (MS1), **caractérisé en ce qu'**il comprend une étape dans laquelle, lorsque ledit véhicule (V) roule avec lesdites pédale de frein (PF) et pédale d'accélérateur (PA) non enfoncées, on déclenche soit un fonctionnement anticipé dudit moteur thermique (MT) pour fournir à un instant prédéfini un couple prédéfini pour assurer une fonction dite de marche rampante lorsque ladite pression en cours devient inférieure à un seuil de pression prédéfini, soit un fonctionnement retardé de ladite machine motrice non-thermique (MM) d'un intervalle de temps prédéfini après que ladite pression en cours soit devenue égale à une valeur prédéfinie, strictement inférieure audit seuil de pression prédéfini, pour fournir audit instant prédéfini ledit couple prédéfini pour assurer ladite fonction de marche rampante, selon que ledit état de charge en cours est inférieur ou supérieur à un seuil d'état prédéfini.

## Patentansprüche

1. Steuergerät (DC) für ein Fahrzeug (V), umfassend i) ein Bremspedal (PF) das mit einem Bremskreis (CF) gekoppelt ist, in dem ein aktueller Druck herrscht, ii) ein Fahrpedal (PA), iii) mindestens einen Energiespeicher (MS1) mit einem aktuellen Ladezustand, und iv) eine Wärmekraftmaschine (MT) und eine nicht-thermische Antriebsmaschine (MM), die jeweils Drehmomente für mindestens einen Zug (T1) durch Verbrauch von Kraftstoff bzw Energie bereitstellen in der Energiespeichereinrichtung (MS1) gespeichert, **dadurch gekennzeichnet, dass** sie eine Steuereinrichtung (MC) umfasst, die auslöst, wenn das Fahrzeug (V) rollt, während das Bremspedal (PF) und das Gaspedal (PA) nicht niedergedrückt sind, dh eine erwartete Betätigung von wobei die Wärmekraftmaschine (MT) zu einem vordefinierten Zeitpunkt ein vordefiniertes Drehmoment bereitstellt, um eine sogenannte Kriechfunktion sicherzustellen, wenn der laufende Druck unter einen vordefinierten Druckschwellenwert sinkt, eine Funktion der nicht-thermischen Antriebsmaschine (MM) um ein vordefiniertes Zeitintervall, nachdem der aktuelle Druck gleich einem vordefinierten Wert geworden ist, der streng kleiner als der vordefinierte Druckschwellenwert ist, um das vordefinierte Moment bei dem vordefinierten Drehmoment zum Ausführen der Kriechfunktion bereitzustellen, abhängig davon, ob der aktuelle Ladezustand niedriger oder höher als ein vordefinierter Zustandsschwellenwert ist.

2. Vorrichtung nach Anspruch 1, **dadurch gekennzeichnet, daß** die Steuermittel (MC) den Betrieb der Wärmekraftmaschine (MT) um eine vordefinierte Dauer in Bezug auf einen Referenzzeitpunkt, bei dem der aktuelle Druck gleich dem vordefinierten Wert wird, vorverlegt auslösen wobei diese vordefinierte Dauer eine Funktion der Zeit ist, die die Wärmekraftmaschine (MT) benötigt, um das vordefinierte Drehmoment der Erzeugung eines ersten Drehmomentsollwerts zu liefern, der der Kriechfunktion gewidmet ist und gleich dem vordefinierten Drehmoment ist.

3. Vorrichtung nach Anspruch 2, **dadurch gekennzeichnet, dass** die Steuermittel (MC) eine vordefinierte Dauer zwischen - 20 ms und - 100 ms verwenden.

4. Vorrichtung nach Anspruch 2 oder 3, **dadurch gekennzeichnet, daß** die Steuermittel (MC) eine unter Verwendung von vordefinierten Dauer zuvor gelernte für das Fahrzeug (V).

5. Vorrichtung nach einem der Ansprüche 1 bis 4, **dadurch gekennzeichnet, daß** die Steuermittel (MC) den Betrieb der nicht-thermischen Antriebsmaschine (MM) verzögert um das vordefinierte Zeitintervall in Bezug auf einen Referenzzeitpunkt auslösen, wobei der Strom Druck gleich dem vordefinierten Wert wird, wobei dieses vordefinierte Zeitintervall eine Funktion der Zeit ist, die nicht-thermische Antriebsmaschine (MM) benötigt, um das vordefinierte Drehmoment von der Erzeugung eines zweiten dedizierten Drehmomentsollwerts bis zur Kriechfunktion bereitzustellen, und gleich das vordefinierte Drehmoment.

6. Vorrichtung nach Anspruch 5, **dadurch gekennzeichnet, dass** die Steuermittel (MC) ein vordefiniertes Zeitintervall zwischen + 20 ms und + 100 ms verwenden.

7. Vorrichtung nach Anspruch 5 oder 6, **dadurch gekennzeichnet, daß** die Steuermittel (MC), das ein unter Verwendung von vordefinierten Zeitintervall gelernt vorher für das Fahrzeug (V).

8. Fahrzeug (V) umfassend i) ein Bremspedal (PF), das an einen Bremskreis (CF) gekoppelt ist, in dem ein aktueller Druck herrscht, ii) ein Fahrpedal (PA), iii) mindestens einen Energiespeicher (MS1) mit einem Zustand Ladung im Gange, und iv) eine Wärmekraftmaschine (MT) und eine Nicht-Wärmekraftmaschine (MM), die jeweils Drehmomente für mindestens einen Zug (T1) bereitstellen, indem sie jeweils Kraftstoff und in der Energiespeichereinrichtung (MS1) gespeicherte Energie verbrauchen, **dadurch gekennzeichnet, dass** es ferner eine Steuervorrichtung (DC) nach einem der vorhergehenden Ansprüche umfasst.

9. Fahrzeug nach Anspruch 8, dadurch ekennzeichnet, daß die genannten nicht-thermische Antriebsmaschine (MM) ist der elektrischen Typ, und die die Energiespeichermittel (MS1) speichert elektrische Energie.

10. Steuerverfahren (DC) für ein Fahrzeug (V), umfassend i) ein Bremspedal (PF), das mit einem Bremskreis (CF) gekoppelt ist, in dem ein aktueller Druck herrscht, ii) ein Gaspedal (PA)), iii) at mindestens einen Energiespeicher (MS1) mit einem aktuellen Ladezustand, und iv) eine Wärmekraftmaschine (MT) und eine nicht-thermische Antriebsmaschine (MM), die jeweils Drehmomente für mindestens einen Zug (T1) durch Verbrauch von jeweils Kraftstoff bereitstellen und in der Energiespeichereinrichtung (MS1) gespeicherte Energie, **dadurch gekennzeichnet, dass** sie einen Schritt umfasst, in dem, wenn das Fahrzeug (V) mit nicht niedergedrückter Pedalbremse (PF) und Gaspedal (PA) fährt, entweder eine erwartete Betätigung von anticipated die Wärmekraftmaschine (MT) ausgelöst wird, um zu einem vordefinierten Zeitpunkt ein vordefiniertes Drehmoment bereitzustellen, um eine sogenannte Kriechfunktion sicherzustellen, wenn der laufende Druck unter einen vordefinierten Druckschwellenwert fällt, Verzögerung der nicht-thermischen Antriebsmaschine (MM) um ein vordefiniertes Zeitintervall, nachdem der aktuelle Druck gleich einem vordefinierten Wert geworden ist, der streng niedriger als der vordefinierte Druckschwellenwert ist, um zu dem vordefinierten Zeitpunkt das vordefinierte Drehmoment bereitzustellen, um die Kriechfunktion sicherzustellen, abhängig davon, der aktuelle Ladezustand unter oder über einem vordefinierten Zustandsschwellenwert liegt.

## Claims

1. Control device (DC) for a vehicle (V) comprising i) a brake pedal (PF) coupled to a braking circuit (CF) in which a current pressure prevails, ii) an accelerator pedal (PA), iii) at least one energy storage means (MS1) having a current state of charge, and iv) a heat engine (MT) and a non-thermal drive machine (MM) respectively providing torques for at least a train (T1) by consuming respectively fuel and energy stored in said energy storage means (MS1), **characterized in that** it comprises control means (MC) triggering, when said vehicle (V) rolls with said brake pedal (PF) and accelerator pedal (PA) not depressed, an anticipated operation of said heat engine (MT) to provide at a predefined moment a predefined torque to ensure a so-called crawling function when said pressure in progress becomes below a predefined pressure threshold, a function of said non-thermal prime mover (MM) by a predefined time interval after said current pressure has become equal to a predefined value, strictly less than said predefined pressure threshold, to provide said predefined moment at said predefined torque for performing said crawling function, depending on whether said current state of charge is lower or higher than a predefined state threshold.

2. Device according to claim 1, **characterized in that** said control means (MC) trigger said operation of the heat engine (MT) advanced by a predetermined time relative to a reference time when said current pressure becomes equal to said value predefined, this predetermined time being a function of the time required for said heat engine (MT) to provide said preset torque from generating a first torque set dedicated to said function of walking crawled and equal to said predefined torque.

3. Device according to Claim 2, **characterized in that** the said control means (MC) use a predefined duration of between - 20 ms and - 100 ms.

4. Device according to claim 2 or 3, **characterized in that** said control means (MC) using a predefined duration previously learned for said vehicle (V).

5. Device according to one of claims 1 to 4, **characterized in that** said control means (MC) trigger said operation of the non-thermal engine (MM) delayed from said predefined time interval with respect to a reference time when said current pressure becomes equal to said predefined value, this predefined time interval being the time needed for the said prime mover nonthermal (MM) to provide the said preset torque from generating a second torque setpoint dedicated to said crawling function and equal to said predefined torque.

6. Device according to claim 5, **characterized in that** the said control means (MC) use a predefined time interval of between + 20 ms and + 100 ms.

7. Device according to claim 5 or 6, **characterized in that** said control means (MC) using a predefined time interval learned beforehand for said vehicle (V).

8. Vehicle (V) comprising i) a brake pedal (PF) coupled to a braking circuit (CF) in which current pressure prevails, ii) an accelerator pedal (PA), iii) at least one storage means energy (MS1) having a state of charge in progress, and iv) a heat engine (MT) and a non-heat engine (MM) respectively providing torques for at least one train (T1) by consuming fuel respectively and energy stored in said energy storage means (MS1), **characterized in that** it further comprises a control device (DC) according to one of the preceding claims.

9. Vehicle according to Claim 8, **characterized in that** the said non-thermal driving machine (MM) is of the electrical type, and the said energy storage means (MS1) stores electrical energy.

10. Control process (DC) for a vehicle (V) comprising i) a brake pedal (PF) coupled to a braking circuit (CF) in which a current pressure prevails, ii) an accelerator pedal (PA)), iii) at least one energy storage means (MS1) having a current state of charge, and iv) a heat engine (MT) and a non-thermal drive machine (MM) respectively providing torques for at least a train (T1) by consuming respectively fuel and energy stored in said energy storage means (MS1), **characterized in that** it comprises a step in which, when said vehicle (V) is running with said pedal brake (PF) and accelerator pedal (PA) not depressed, either an anticipated operation of said heat engine (MT) is triggered to provide at a predefined moment a predefined torque to ensure a so-called crawling function when said pressure in progress falls below a predefined pressure threshold, operation delayed of said non-thermal prime mover (MM) by a predefined time interval after said current pressure has become equal to a predefined value, strictly lower than said predefined pressure threshold, to provide at said predefined instant said predefined torque to ensure said crawling function, depending on whether said current state of charge is below or above a predefined state threshold.
